Europäisches Patentamt

European Patent Office

Office européen des brevets

(19)

(11) EP 0 377 992 B1

(12) **EUROPEAN PATENT SPECIFICATION**

(45) Date of publication and mention
of the grant of the patent:
**17.04.1996 Bulletin 1996/16**

(51) Int Cl.6: **G06F 7/52**

(21) Application number: **89313402.3**

(22) Date of filing: **20.12.1989**

(54) **Floating point division method and apparatus**

Gleitkommadivisions-Verfahren und -Anordnung

Méthode et dispositif de division à virgule flottante

(84) Designated Contracting States:
**DE FR GB**

(30) Priority: **13.01.1989 US 297771**

(43) Date of publication of application:
**18.07.1990 Bulletin 1990/29**

(73) Proprietor: **International Business Machines
Corporation
Armonk, N.Y. 10504 (US)**

(72) Inventors:
• **Cocanougher, Daniel
Ft. Worth TX 76106 (US)**

• **Markstein, Peter Willy
Austin TX 78731 (US)**

(74) Representative: **Burt, Roger James, Dr.
IBM United Kingdom Limited
Intellectual Property Department
Hursley Park
Winchester Hampshire SO21 2JN (GB)**

(56) References cited:
**EP-A- 0 154 182          US-A- 4 594 680**

• **ELEKTRONIK. vol. 35, no. 17, 22 August 1986,
MUNCHEN DE pages 57 - 61; Wilfried TAETOW:
"Schnelle Gleitkommadivision"**

**Description**

This invention relates to data processing system and performing floating point operations and more specifically to a data processing system performing a floating point division operation.

Traditionally floating point division operations have included the computing of a quotient in a computer by first generating an estimate of the reciprocal of the divisor. The reciprocal is refined, in other words, the precision of mantissa is increased, and eventually multiplied by the dividend to produce a quotient. This method has often been plagued with the problem of getting - or rather, of failing to get consistently - the last bit of the mantissa correct in all cases of the division. Computers which have used this technique in the past have been notorious for not always producing the expected results, and these deviations were most disturbing for situations in which an exact quotient should be expected, but the hardware, using the sort of scheme described in the earlier paragraph, simply got the last bit wrong some of the time.

With the Institute of Electrical and Electronic Engineers providing a standard for a floating point arithmetic, the standard has been set which describes the correct results for floating point arithmetic operations. This standard is entitled "An American National Standard - IEEE Standard For Binary Floating-Point Arithmetic", ANSI/IEEE Std. 754-1985. A computer that purports to support the IEEE floating point standard must get the correct results in all cases.

Electronic, Vol. 35, number 17, 17/22 August 1986, pp 57-61, W. Taetow: "Schelle Glietkommadivision" discloses a method and system for performing floating point operations according to the IEEE standard.

Several patents illustrate the techniques for performing a floating point divide operation.

- US Patent No 4,442,492 discloses a data processing system that includes a technique for inserting a round bit in the appropriate bit of the floating point mantissa.
- US Patent No 4,413,326 discloses a mechanism for performing floating point calculations in a variable number of steps using a primary microprocessor and a second microprocessor where each microprocessor includes its own control read only memory. Floating point operations include the participation of bot microprocessors. In executing the division operation mantissa are preconditioned to be normalised, the most significant bit being a logical 1. The operation proceeds until the leading bit of the mantissa becomes a 1 signifying the completion of the operation.
- US Patent No 4,481,600 discloses a technique of generating quotients from successive iterations.
- US Patent No 4,707,798 discloses a divide method using an approximate reciprocal divisors to calculate the quotient that can shorten the time required for performing check and correction after intermediate quotients have been calculated through the successive iteration process.
- US Patent No 3,508,038 discloses an apparatus for dividing a fractional binary dividend by a fractional binary divisor wherein the quotient is developed by performing successive multiplications of the dividend and approximate reciprocals of the divisor.
- US Patent No 4,011,439 discloses an accelerated method of generating quotients of two binary numbers. A divisor array is used to effectively form the reciprocal of the binary divisor and the quotient is determined by multiplying the reciprocal with the dividend.
- US Patent No 3,648,038 discloses a method for obtaining the reciprocal of the number of using a flow-through technique. In this method the reciprocal of the divisor is multiplied with the dividend to produce the desired quotient.
- US Patent No 3n633,018 discloses a method which is used to find the reciprocal of a number with two multiplications and the quotient of the two numbers with three multiplications.
- US Patent No 3,777,132 discloses a method for performing a binary division by multiplying the reciprocal of a divisor by a dividend. The quotient is generated at the same time as the reciprocal of the divisor.

It is an object of the present invention to provide a method for performing a floating point division according to the IEEE arithmetic standard that can be implemented using multiplication and addition data processing circuitry. It is a further object of the invention to provide a method for ensuring that the bits of the mantissa are correct according to a preselected rounding mode without the use of any conditional testing to adjust the final result.

In accordance with the present invention a method for performing floating point division of a dividend by a divisor to produce a quotient having a mantissa of N bits in a data processing system having memory, the method comprising the steps of:

(1) determining and storing in said memory an initial guess of a reciprocal of the divisor,

and being characterised by the steps of

(2) calculating and storing in said memory an initial guess of the quotient, by multiplying the dividend by said reciprocal,

(3) increasing the precision of the initial guess of the reciprocal by calculating and storing in said memory an error parameter, by one minus the divisor multiplied by the current reciprocal, and calculating and storing in said memory a new guess of the reciprocal by adding to the current guess of the reciprocal the error parameter multiplied by the current guess of the reciprocal,

(4) calculating and storing in said memory a remainder guess by subtracting from the dividend the divisor multiplied by the current guess of the quotient,

(5) increasing the precision of the mantissa of the initial guess of the quotient by calculating and storing in said memory a new current quotient from the current quotient plus the remainder guess multiplied by the new guess of the reciprocal of the divisor,

(6) repeating steps (3), (4) and (5) until the precision of the reciprocal guess and the quotient guess exceeds N bits,

(7) calculating and storing in said memory a final quotient from the last current quotient guess plus the latest current reciprocal guess multiplied by the latest remainder guess.

The present invention also provides apparatus for performing such a method.

In one such arrangement disclosed hereinafter, both a method and apparatus for performing floating point division are described wherein the floating point division is a division of a dividend by a divisor that produces a quotient having a mantissa of n bits. The apparatus includes a circuit for computing an initial guess of a reciprocal of the divisor. Also, a circuit for computing an initial guess of the quotient from the initial guess of the reciprocal is included. Circuitry for increasing the precision of the initial guess of the reciprocal guess by computing an error parameter and a computing a current guess the reciprocal from the error parameter and the initial guess of the reciprocal is provided. A circuit for increasing the precision of the mantissa of the initial guess of the quotient by computing a current quotient from the current guess of the reciprocal is also provided. Also, a circuit for computing a remainder guess from the current reciprocal guess and the current quotient guess is provided. A circuit for increasing the precision of the mantissa of the reciprocal quotient and remainder are provided. The precision is increased until the precision of the reciprocal and the quotient exceeds n bits. Lastly, a circuit is provided that computes a final quotient from the last current quotient plus the last current reciprocal times the last remainder. Initially, floating point division is accomplished as previously described implementing a rounding scheme by performing round-to-nearest operations. When performing the final operation, i.e., the computation of the final quotient, other rounding schemes may be used such as round-to-zero, round toward negative infinity or round toward positive infinity as well as round-to-nearest.

The disclosed apparatus for performing floating point division of a dividend by a divisor for producing a quotient having a rounded mantissa of N bit precision, comprises means for computing an initial guess of a reciprocal of the divisor; means for computing an initial guess of the quotient from the initial guess of the reciprocal rounding by a round-to-nearest operation; means for increasing the precision of the mantissa of the initial guess of the reciprocal by computing an error parameter and computing a current guess of the reciprocal from the error parameter and the initial guess of the reciprocal rounding by a round-to-nearest operation; means for increasing the precision of the mantissa of the initial guess of the quotient by computing a current quotient from the current guess of the reciprocal rounding by a round-to-nearest operation; means for computing a remainder guess from the current reciprocal guess and the current quotient guess rounding by a round-to-nearest operation; means for increasing the precision of the mantissas of the current guesses of the reciprocal and quotient until the precision of the reciprocal guess and the quotient guess exceeds N bits; and means for computing a final quotient from the last current quotient guess plus the latest current reciprocal guess times the latest remainder guess rounding by an operation other than a round-to-nearest operation. Also, a mechanism is provided to signal when an exact quotient has been calculated. This is accomplished when the remainder that is computed is zero.

The present invention will be described further by way of example with reference to an embodiment thereof as illustrated in the accompanying drawings, in which

Figure 1 if a flow chart illustrating the floating point division method;

Figure 2 is a flow chart illustrating a first preferred embodiment of the floating point division method;

Figure 3 is a flow chart illustrating a second preferred embodiment of the floating point division operation;

Figure 4 is a block diagram illustrating the floating point arithmetic unit;

Figure 5 is a flow chart illustrating the operation of the control circuitry for the floating point arithmetic unit; and

Figure 6 is a flow chart illustrating the operation of the divide floating point control unit.

The method for performing the floating point division that will be discussed addresses only the treatment of the mantissa of the operands and results. The treatment of exponents is well known in the art so will not be addressed in this discussion. The five steps of the division will now be discussed.

1. Initially a divisor reciprocal guess is chosen. For divisors whose mantissa consists of all one bits, the magnitude of the initial approximation of the reciprocal of the divisor must be greater than or equal to the magnitude of the actual reciprocal of the divisor. In the disclosed arrangement, the magnitude of the initial guess of the reciprocal of the divisor must be greater than or equal to the magnitude of the actual reciprocal of the divisor correctly rounded using a rounded-to-nearest operation. Rounding will be discussed at a later point in this specification.

2. For divisors whose mantissa consists of all one bits, the initial approximation of the quotient must be greater or equal in magnitude to the magnitude of the actual quotient (correctly rounded using the rounded-to-nearest operation in the preferred embodiment). The sign of the approximation is an exclusive-or of the signs of the operands.

3. An improved approximation of the reciprocal is generated from a previous approximation by computing an error parameter. The error parameter "e" is as follows:
$$e = 1.0 - b*y$$
$$y' = y + e*y$$
where $y'$ is the improved approximation. All bits for the products of these two equations must participate in sums before rounding to the machine's normal mantissa length.

4. An improved approximation of the quotient "q'" is generated by using the previous approximation of the quotient by the following computations:
$$r = a - b*q$$
$$q' = q + r*y,$$
where y was computed in accordance with step 3. All bits of the above products must participate in the sums before rounding to the machine's normal mantissa length.

5. If an approximation to a quotient is known to be correct within one unit in the last place, the magnitude of the reciprocal of the divisor used to improve the approximation to the quotient must be equal to the magnitude of the actual reciprocal of the divisor correctly rounded (using rounded-to-nearest operation), except for the divisor whose mantissa consists of all one bits, for which the magnitude of the approximation may also be smaller than the correctly rounded reciprocal by one unit in the last place. The required reciprocal will have resulted from iterative applications of step 3.

In order to clearly understand the inventive method, the techniques of rounding must also be understood. Generally, there are four rounding modes. The first rounding mode termed round-to-nearest which selects the closest representable number in the mantissa. The second possibility is a round-to-zero which discards the fractional bits that don't fit in the mantissa. This is commonly termed truncation. Another rounding mode is the round-to-positive infinity which means that the rounding is accomplished by rounding to the next largest representable number. Conversely, round-to-negative infinity includes rounding to the next smaller representable number. In practice the round-to-nearest operation is the most difficult, and the round-to-zero operation the simplest. The round-to-positive infinity and round-to-negative infinity are between in complexity.

In the disclosed arrangement the floating point arithmetic unit performs one primitive operation:
$$A + B*C$$
with three variations (a) -A + B*C; (b) -A - B*C; and (c) A - B*C with each primitive operation being performed with only one rounding error (i.e., rounding is accomplished at the last stage of computation). Ordinary addition and subtraction are accomplished by inserting a 1.0 for the C operand and ordinary multiplication is realised by giving the A operand the value of 0.0.

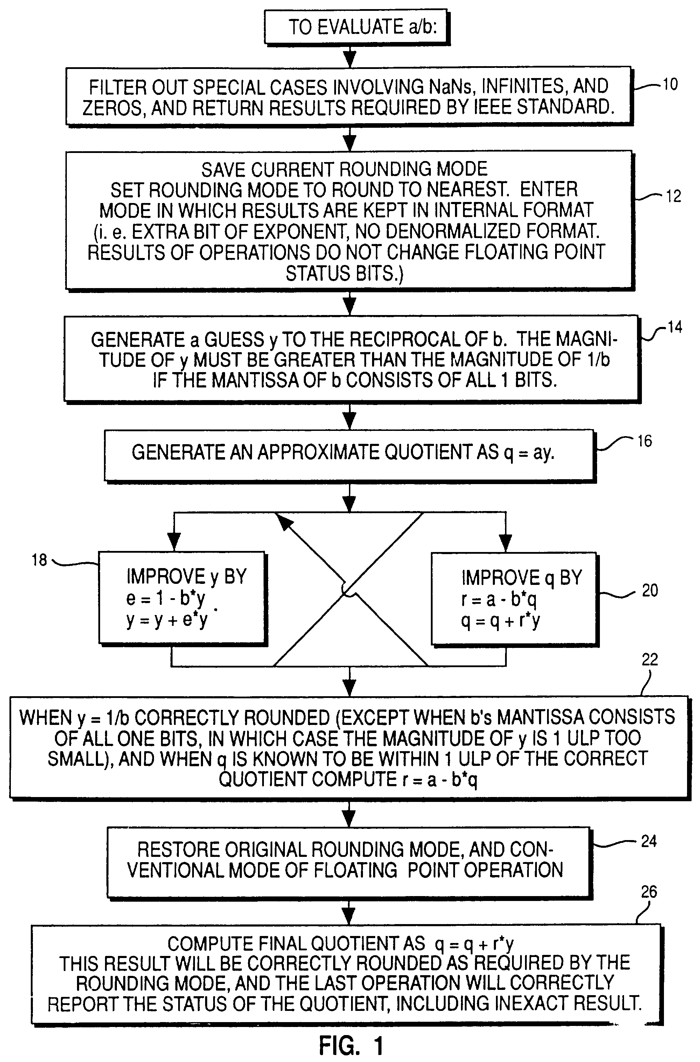

The operation of the disclosed arrangement is as follows, reference being made to Fig. 1:-

In step 10, numbers such as infinities and zeros together with numbers that do not represent numeric values are removed from the computation. In other words, when such numbers are encountered, the results required by the IEEE standard is returned. In step 12, the current rounding mode is changed from whatever the current rounding mode is to a round-to-nearest operation. In step 14, an initial guess of the reciprocal of the divisor is made. If the divisor mantissa is all one bits, the magnitude of the reciprocal must be greater than the actual magnitude of 1/b. In step 16, the reciprocal y is used with a to compute an initial guess of the quotient. In steps 18 and 20, the reciprocal y and the quotient q are improved. Improved means that the precision of the mantissa of the reciprocal and the quotient are increased. In step 18, the error term e is computed as shown. This error term is then used to recompute the current guess or estimate of the reciprocal y as shown. Likewise in step 20, the quotient is "improved" by first computing the remainder using the dividend and the divisor together with the last estimate of the quotient and estimating a new quotient by using the last quotient the computed remainder and the latest estimate of the reciprocal. Steps 18 and 20 can be performed iteratively and in either order relative to each other. In step 22, when the reciprocal y and the quotient q have been iteratively improved to the point where their precision exceeds the precision of the mantissa before the results were rounded, the final remainder is computed as shown. In step 24, the original rounding mode is restored. In step 25, the final quotient is computed as shown.

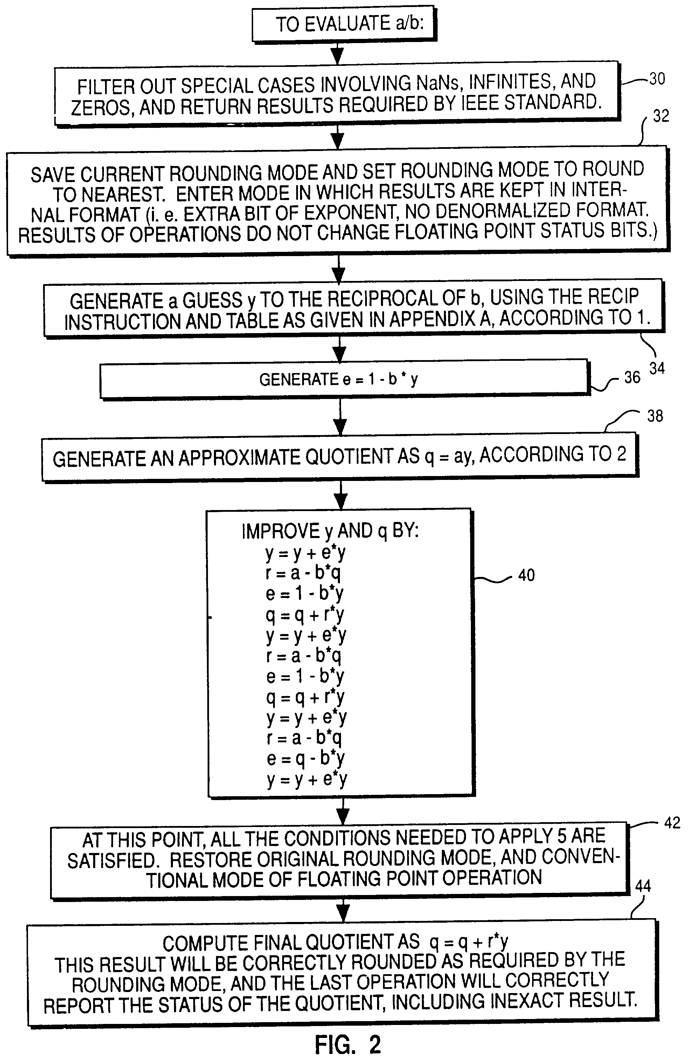

Referring to Fig.2, in step 30, the non-numbers, infinities and zeros are filtered out by providing the results dictated by the IEEE standard. In step 32, the current rounding mode is changed to round-to-nearest operation. In step 34, an initial guess of the reciprocal y is made by accessing a table as illustrated in Appendix A. In step 36, the error term e is computed as shown. In step 38, the first approximation of the quotient q is made. In step 40, she quotient q and the reciprocal y are "improved" by performing the computations in accordance with the sequence shown. In step 42, the original rounding mode is restored. In step 44, the final quotient is computed is shown.

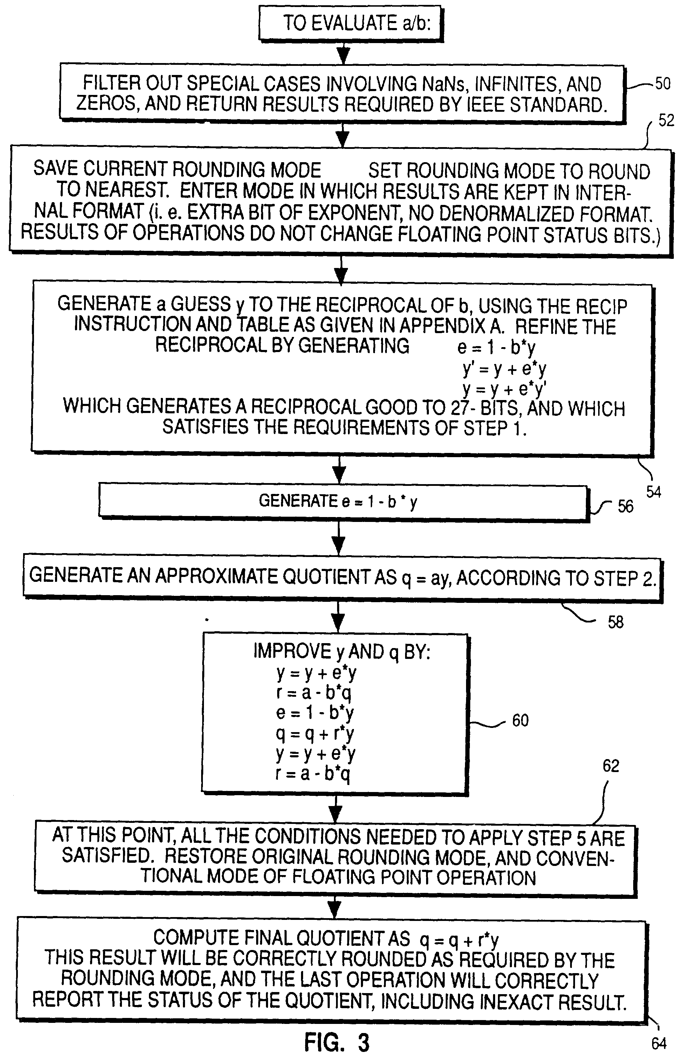

Figure 3 illustrates a second preferred embodiment of the inventive method. In step 50, the non-numbers, infinities and zeros are filtered as before. In step 52, the current rounding mode is altered to a round-to-nearest operation. In step 54, the initial guess of the reciprocal is made according to the table in Appendix A. The reciprocal is then refined by the computation of the error term e as shown and the following reciprocal calculations. In step 56, the error term e is recomputed using the latest reciprocal estimate. In step 58, the quotient estimate is generated. In step 60, the mantissa of the reciprocal and quotient are "improved" as shown be performing the computations illustrated. In step 62, the original rounding mode is restored. In step 64, the final quotient is computed.

It should be noted that in both preferred embodiments that included in the last step of computing the final quotient, an indication is given when the quotient is exact (i.e., when the remainder is zero). The indication provided as to quotient exactness is a result of the quotient sum being characterised as exact.

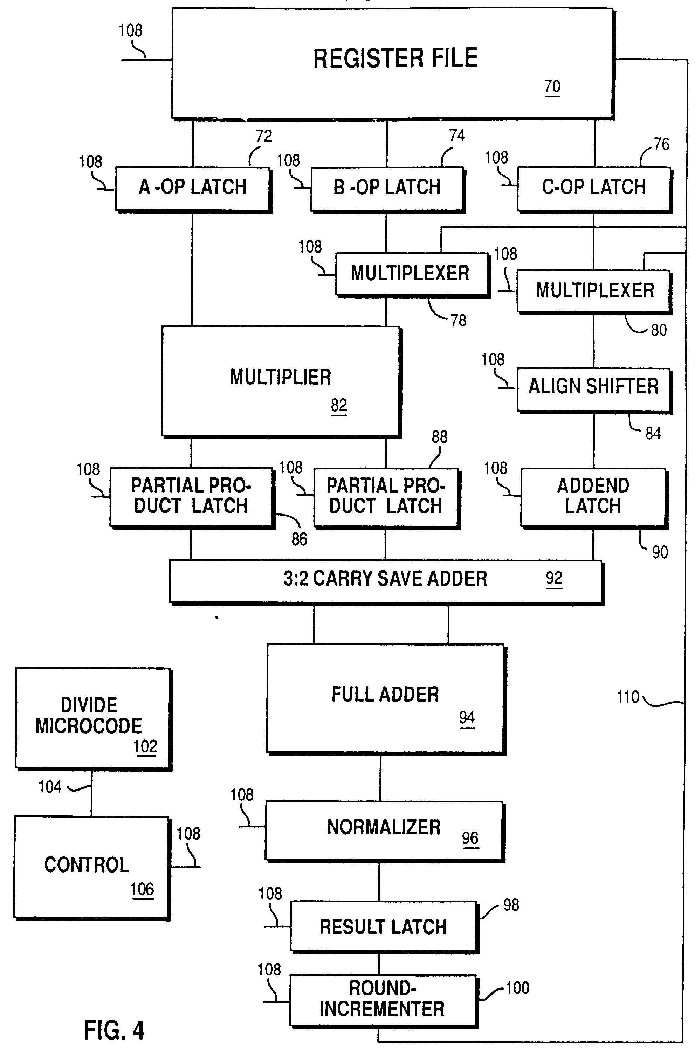

Figure 4 is a block diagram of a floating point arithmetic unit. This particular floating point unit provides for a multiplication and addition operation to occur in parallel. Register file 70 contains 40 floating point arithmetic words. Under the control of control circuitry 106 through control line 108 and a floating point arithmetic data word is loaded into the A OPERATION LATCH 72. Likewise, the contents of B OPERATION LATCH 74 and C OPERATION LATCH 76 are loaded. The contents of the A OPERATION LATCH 72 and B OPERATION LATCH 74 are provided to a multiplier 82. The contents of the B OPERATION LATCH 74 passes through a multiplexor 78 to be explained later. The multiplier 82 provides a partial product to latch 86 and a second partial product to latch 88. The C OPERATION LATCH 76 provides the floating point number through multiplexor 80 to an align shifter 84. The output of the align shifter 84 is provided to the addend latch 90. It should be understood that the contents of the registers that are operated on by the multiplier 82 and the align shifter 84 is that of the mantissa of the floating point number. The operation of multiplication of the exponent is provided in the control circuitry 106 and consists of addition. The result of the exponent calculation provides an input to the alignment shifter 84 to properly shift the contents of the C OPERATION LATCH so it may be added to the product of the A OPERATION LATCH 72 and B OPERATION LATCH 74.

The 3:2 carry save adder 92 receives the contents of latches 86, 88 and 90. Two outputs are provided to the full adder 94. The contents of the full adder 94 is normalised in the normalising circuit 96 and then stored in the result latch 98. The output of the result latch 98 is provided to the round incrementor 100. The output of the round incrementor 100 can be provided to the register file 70 or as a substitute for multiplexor 78 to the multiplier or through the multiplexor 80 to the align shifter 84. Since this floating point arithmetic logic unit operates in the pipeline fashion, by providing multiplexor 78 and 80, results from a previous instruction may be used for a successive instruction without being stored in the register file 70.

In the divide operation, the control circuitry 106 functions with a divide microcode control circuit 102 via line 104 to implement the divide procedures illustrated in Figures 1, 2, and 3.

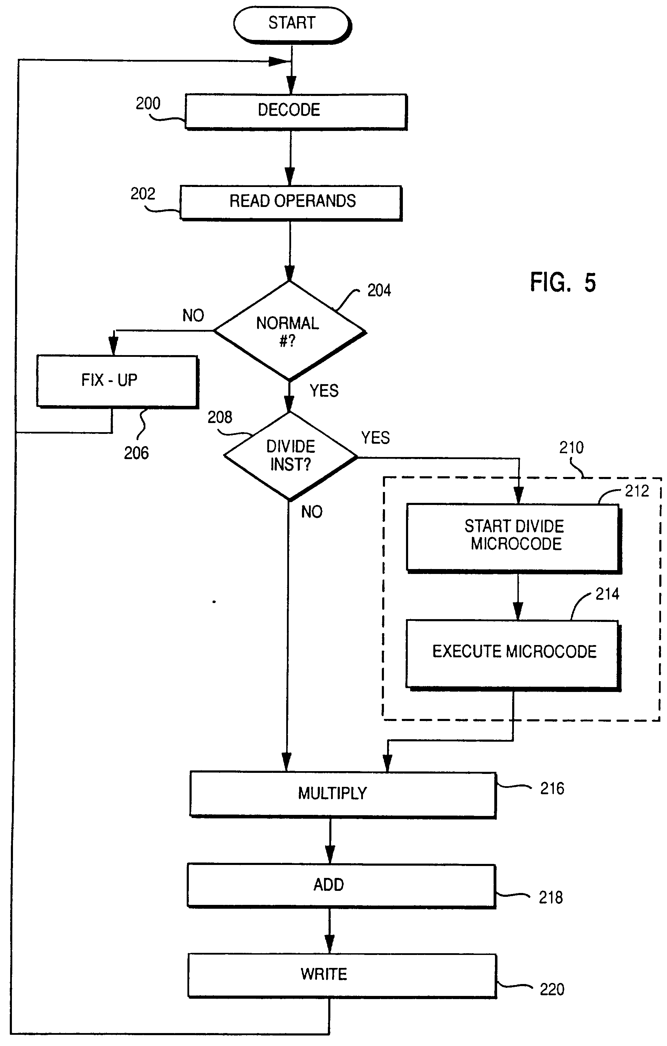

Figure 5 illustrates the control flow of the control circuit 106. Initially, the floating point instruction is decoded in step 200 and the operands are read in step 202 (from the register file 70). In step 204, a determination is made as to whether or not the operands are normal numbers (corresponding to step 30, Figure 2, filtering out special cases). If the operands are not normal numbers, the control flow proceeds to step 206 to "fix-up" the numbers according to the IEEE standard and the control flow returns to step 200. However, if the numbers are normal numbers, the control flow proceeds to step 208 to determine if there is a divided instruction present. If there is no divided instruction, the control flow proceeds to step 216. If there is a divide instruction present, the control flow proceeds to the divide microcode 210 including step 212 which initiates the divide microcode procedure and step 214 which executes the microcode. After step 214, the control flow proceeds to step 216 to perform a multiply operation. Then in step 218, an add operation is performed followed by step 220 which is the write back into the register file 70. Step 216 (the multiply step) corresponds to the multiplication of the remainder r by the reciprocal in step 44. Step 218 of Figure 5 corresponds to the adding of the quotient to the remainder times reciprocal in step 44. The write back to register step 220 corresponds to the writing of the final quotient into the register file 70.

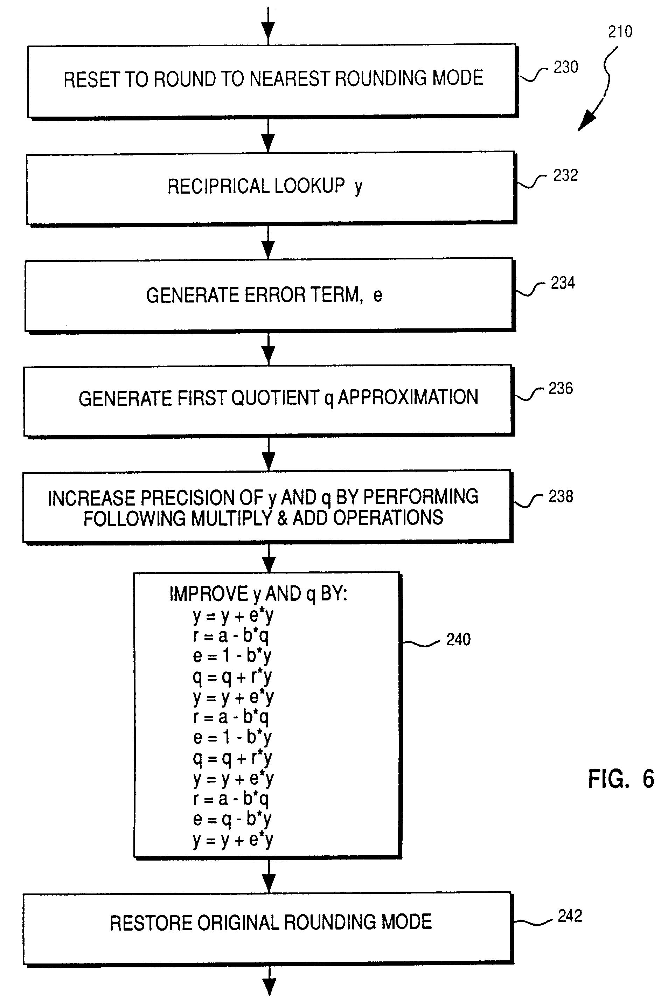

Figure 6 illustrates the contents of the divide marker code 210. Initially, in step 230, the rounding mode is reset to round to nearest rounding mode. In step 232, the reciprocal y is looked up in the look-up table for the first reciprocal guess. In step 234, the error term e is generated. In step 236, the first approximation of the quotient q is made. In step 238 and 240, the precision of the reciprocal y and the quotient q are increased by performing the calculations listed in step 240. In step 242, the original rounding mode is restored.

As previously discussed, the multiple step 216, the add step 218 and the write back step 220 then correspond to the computation and storing of the final quotient (step 44, Figure 2).

As a result of the operation of the floating point unit, the quotient resulting from the floating point division operation is correct to the desired precision without requiring any additional circuitry.

Other aspects of this kind of arrangement are disclosed in co-pending applications EP 0 377 991, EP 0 377 990 and EP 0 377 994.


APPENDIX A

This appendix describes the generation of a first approximation to the reciprocal of a number, as required by the disclosed arrangements hereof. The table at the end generates approximations in the required manner.

The operation RECIP Y,B is a floating point operation. Y and B are both floating point registers. The result of the operation is to put into register Y an approximation to the reciprocal of B. A specification for this operation follows below:
If B is a NaN, then Y = B;

else   if B is plus or minus infinity, the Y is plus or minus zero;
else   if B is plus or minus zero, then Y is plus or minus infinity;
else   if B is de-normalised, then represent B in normalised internal form.


Sign of Y = sign of B.
Unbiased exponent of Y = 1 - unbiased exponent of B
Leading 9 fraction* bits of Y = table (leading 8 fraction* bits of B).

With the table given, $0 <= ABS(1 - BY) <= 1/362$, except for the special cases involving zeros, infinities, and NaN. In particular, for the divisor of all-ones, the construction of the RECIP operation will overestimate the magnitude of the reciprocal, as is required to guarantee convergence to a correctly rounded result.

RECIP need not be exposed in the computer architecture, but instead, it may only be available for use by the DIVIDE instruction. In that case, it may not be necessary to cope with NaNs, infinities, or zeros, since these cases would be treated as special cases by the hardware.

Below in hexadecimal, is a table that can be used to construct the fraction required by the RECIP operation for long format IEEE numbers: (table positions and contents are given in hexadecimal. The table values, 9 bits long, are left adjusted).

| 0 | ff0 | 32 | c68 | 64 | 990 | 96 | 740 | 128 | 550 | 160 | 3a8 | 192 | 240 | 224 | 110 |
|---|-----|----|-----|----|-----|----|-----|-----|-----|-----|-----|-----|-----|-----|-----|
| 1 | fd0 | 33 | c50 | 65 | 978 | 97 | 730 | 129 | 540 | 161 | 3a0 | 193 | 238 | 225 | 100 |
| 2 | fb0 | 34 | c30 | 66 | 968 | 98 | 718 | 130 | 530 | 162 | 390 | 194 | 230 | 226 | 0f8 |
| 3 | f90 | 35 | c18 | 67 | 950 | 99 | 708 | 131 | 528 | 163 | 388 | 195 | 228 | 227 | 0f0 |
| 4 | f70 | 36 | c00 | 68 | 940 | 100 | 6f8 | 132 | 518 | 164 | 378 | 196 | 218 | 228 | 0e8 |
| 5 | f50 | 37 | be8 | 69 | 928 | 101 | 6e8 | 133 | 508 | 165 | 370 | 197 | 210 | 229 | 0e0 |
| 6 | f38 | 38 | bd0 | 70 | 918 | 102 | 6d8 | 134 | 4f8 | 166 | 360 | 198 | 208 | 230 | 0d8 |
| 7 | f18 | 39 | bb8 | 71 | 900 | 103 | 6c8 | 135 | 4f0 | 167 | 358 | 199 | 200 | 231 | 0d0 |
| 8 | ef8 | 40 | ba0 | 72 | 8f0 | 104 | 6b8 | 136 | 4e0 | 168 | 350 | 200 | 1f0 | 232 | 0c8 |
| 9 | ed8 | 41 | b88 | 73 | 8e0 | 105 | 6a8 | 137 | 4d0 | 169 | 340 | 201 | 1e8 | 233 | 0c0 |
| 10 | ec0 | 42 | b70 | 74 | 8c8 | 106 | 698 | 138 | 4c0 | 170 | 338 | 202 | 1e0 | 234 | 0b0 |
| 11 | ea0 | 43 | b58 | 75 | 8b8 | 107 | 688 | 139 | 4b8 | 171 | 328 | 203 | 1d0 | 235 | 0a8 |

Continuation of the Table on the next page

(*Note: By 'leading 8 fraction bits' or 'leading 9 fraction bits' exclude the leading implied 1 bit that is not physically represented in the IEEE format. In other words, for a normalised number, 'the leading 8 fraction bits' are bits 12-19 of the double word, in the usual IBM left-to-right bit numbering, starting at zero.)

(continued)

| | | | | | | | | | | | | | | | |
|---|---|---|---|---|---|---|---|---|---|---|---|---|---|---|---|
| 12 | e80 | 44 | b40 | 76 | 8a0 | 108 | 678 | 140 | 4a8 | 172 | 320 | 204 | 1c8 | 236 | 0a0 |
| 13 | e68 | 45 | b28 | 77 | 890 | 109 | 668 | 141 | 498 | 173 | 310 | 205 | 1c0 | 237 | 098 |
| 14 | e48 | 46 | b18 | 78 | 880 | 110 | 658 | 142 | 490 | 174 | 308 | 206 | 1b8 | 238 | 090 |
| 15 | e30 | 47 | b00 | 79 | 868 | 111 | 648 | 143 | 480 | 175 | 300 | 207 | 1b0 | 239 | 088 |
| 16 | e10 | 48 | ae8 | 80 | 858 | 112 | 638 | 144 | 478 | 176 | 2f0 | 208 | 1a0 | 240 | 080 |
| 17 | df0 | 49 | ad0 | 81 | 848 | 113 | 628 | 145 | 468 | 177 | 2e8 | 209 | 198 | 241 | 078 |
| 18 | dd8 | 50 | ab8 | 82 | 830 | 114 | 620 | 146 | 458 | 178 | 2d8 | 210 | 190 | 242 | 070 |
| 19 | dc0 | 51 | aa8 | 83 | 820 | 115 | 610 | 147 | 450 | 179 | 2d0 | 211 | 188 | 243 | 068 |
| 20 | da0 | 52 | a90 | 84 | 810 | 116 | 600 | 148 | 440 | 180 | 2c8 | 212 | 180 | 244 | 060 |
| 21 | d88 | 53 | a78 | 85 | 800 | 117 | 5f0 | 149 | 430 | 181 | 2b8 | 213 | 170 | 245 | 058 |
| 22 | d68 | 54 | a60 | 86 | 7e8 | 118 | 5e0 | 150 | 428 | 182 | 2b0 | 214 | 168 | 246 | 050 |
| 23 | d50 | 55 | a50 | 87 | 7d8 | 119 | 5d0 | 151 | 418 | 183 | 2a0 | 215 | 160 | 247 | 048 |
| 24 | d38 | 56 | a38 | 88 | 7c8 | 120 | 5c0 | 152 | 410 | 184 | 298 | 216 | 158 | 248 | 040 |
| 25 | d18 | 57 | a20 | 89 | 7b8 | 121 | 5b0 | 153 | 400 | 185 | 290 | 217 | 150 | 249 | 038 |
| 26 | d00 | 58 | a10 | 90 | 7a8 | 122 | 5a8 | 154 | 3f8 | 186 | 280 | 218 | 140 | 250 | 030 |
| 27 | ce8 | 59 | 9f8 | 91 | 790 | 123 | 598 | 155 | 3e8 | 187 | 278 | 219 | 138 | 251 | 028 |
| 28 | cc8 | 60 | 9e0 | 92 | 780 | 124 | 588 | 156 | 3e0 | 188 | 270 | 220 | 130 | 252 | 020 |
| 29 | cb0 | 61 | 9d0 | 93 | 770 | 125 | 578 | 157 | 3d0 | 189 | 260 | 221 | 128 | 253 | 018 |
| 30 | c98 | 62 | 9b8 | 94 | 760 | 126 | 568 | 158 | 3c0 | 190 | 258 | 222 | 120 | 254 | 010 |
| 31 | c80 | 63 | 9a0 | 95 | 750 | 127 | 560 | 159 | 3b8 | 191 | 250 | 223 | 118 | 255 | 008 |

APPENDIX B

In this appendix, are shown division examples as carried cut in the disclosed arrangements. All numbers are displayed in hexadecimal notation, with the leading bit representing the sign bit, the next 11 bits representing the excess-1023 exponent, and the remaining 52 bits representing the mantissa (with the leading bit not represented for normalised numbers), in accordance with the IEEE binary floating point standard.

Each example starts by showing the numerator and denominator, as well as the rounding mode. The values generated by the preferred embodiment are shown on the left. The values are indented so as to make it easier to find the successive approximations to the quotients, reciprocals, remainders, and errors in the reciprocal. At the end is shown the remainder left for the quotient developed in the disclosed arrangement and the remainder left by the next-closest approximation to the quotient. Note that the approximation of the disclosed arrangement leaves the remainder with the smaller magnitude, as required by the IEEE round to nearest mode of operation.

To the right of each example, is a slightly modified computation, which indicates how a quotient goes astray if one of the rules is not followed:

Example 1:

```
Numerator:    3ff0000000000000

Denominator:  3fffffffffffffff

Rounding mode:  Nearest
        y = 3FE0080000000000          y = 3FE0000000000000

            e = BF5FFFFFFFFFFDFF      e = BCA0000000000000

    q = 3FE0080000000000          q = 3FE0000000000000

        y1 =3FDFFFF800000001        y1= 3FE0000000000000
```

```
                 r =BF5FFFFFFFFFFDFF          r = BCA0000000000000
             e1 =3ECFFFFFFFFFFFFFF           e1= BCA0000000000000
      q1 =3FE0000002000000                   q1= 3FE0000000000000
           y2 =3FDFFFFFFFFE0001              y2= 3FE0000000000000
                  r1 =BE3FFFFF7FFFFFF         r1= BCA0000000000000
             e2 =3DAFFFFFFFFFFFFF            e2= BCA0000000000000
      q2 =3FE0000000000001                   q2= 3FE0000000000000
          y3=3FE0000000000000               y3= 3FE0000000000000
                 r2 =BC9FFFFFFFFFFFE         r2= BCA0000000000000
             e3 =3CA0000000000000           e3= BCA0000000000000
          y4=3FE0000000000000               y4= 3FE0000000000000
      qf =3FE0000000000001                   qf= 3FE0000000000000
   final remainder is BC9FFFFFFFFFFFE

   alternate rem. is 3CA0000000000000
```

In this example, in the incorrect version at the right, y3 was used to compute qf instead of y4. Note that these two approximations to the reciprocal of the divisor differ by only one bit. Even though y3 was correct to over 64 bits before rounding, it was not computed from an approximation to the reciprocal that was good to within 1 unit in the last place as required by rule 5. Hence it was not sufficiently precise to compute the final quotient.

Example 2.

```
   Numerator:    3FFAAAAAAAAAAAA8
   Denominator: 3FFFFFFFFFFFFFFD
   Rounding mode: Nearest
       y = 3FE0080000000000               y = 3FE0080000000000
           e = BF5FFFFFFFFFF9FD           e = BF5FFFFFFFFFF9FD
      q = 3FEAB7FFFFFFFFFFD               q = 3FEAB7FFFFFFFFFFD
          y1 =3FDFFFF800000003            y1= 3FDFFFF800000003
                 r =BF6AAAAAAAAA4FE       r = BF6AAAAAAAAA4FE
            e1 =3ECFFFFFFFFFFFFFD         e1= 3ECFFFFFFFFFFFFFD
```

```
q1  =3FEAAAAAAE000000              q1= 3FEAAAAAAE000000
    y2  =3FDFFFFFFFFE0003          y2= 3FDFFFFFFFFE0003
            r1 =BE4AAAAAABFFFFFE    r1= BE4AAAAAABFFFFFE
        e2 =3DAFFFFFFFFFFFFFD       e2= 3DAFFFFFFFFFFFFFD
q2 =3FEAAAAAAAAAAAAB               q2= 3FEAAAAAAAAAAAAB
    Y3=3FE0000000000001            y3= 3FE0000000000001
            r2 =BC9FFFFFFFFFFFFFE   r2= BC9FFFFFFFFFFFFFE
        e3 =3CA0000000000003
    y4=3FE0000000000002
qf =3FEAAAAAAAAAAAAA               q2= 3FEAAAAAAAAAAAAB
final remainder is 3C9FFFFFFFFFFFFFC
alternate rem. is BC9FFFFFFFFFFFFFE
```

This is the case where the mantissa of the divisor consists of all one bits. If the initial guess to the reciprocal and quotient are underestimates rather than overestimates, the iteration does not converge to the correctly rounded quotient, even though the underestimate was a far superior guess, from a closeness point of view.

The above two cases are illustrations of "hard division problems" in which implementations of the iterated reciprocal method have functioned incorrectly in the past. The disclosed method overcomes these difficulties. It is true that the "hard problems" are few and far between. Without the disclosed method most divisions will work out correctly, but the disclosed enables ALL the divisions to be correctly computed - to the IEEE standard - regardless of rounding mode, and without conditional adjustments at the end.

Furthermore, in the case of exact quotients, the penultimate approximation to the quotient will already be correct, so that the final correction involves adding zero to the correct answer, which is always an exact operation.

**Claims**

1. A method for performing floating point division of a dividend by a divisor to produce a quotient having a mantissa of N bits in a data processing system having memory, the method comprising the steps of

   (1) determining and storing in said memory an initial guess of a reciprocal of the divisor,

   and being characterised by the steps of

   (2) calculating and storing in said memory an initial guess of the quotient, by multiplying the dividend by said reciprocal,

   (3) increasing the precision of the initial guess of the reciprocal by calculating and storing in said memory an error parameter, by one minus the divisor multiplied by the current reciprocal, and calculating and storing in said memory a new guess of the reciprocal by adding to the current guess of the reciprocal the error parameter multiplied by the current guess of the reciprocal,

   (4) calculating and storing in said memory a remainder guess by subtracting from the dividend the divisor multiplied by the current guess of the quotient,

   (5) increasing the precision of the mantissa of the initial guess of the quotient by calculating and storing in said memory a new current quotient from the current quotient plus the remainder guess multiplied by the new guess of the reciprocal of the divisor,

   (6) repeating steps (3), (4) and (5) until the precision of the reciprocal guess and the quotient guess exceeds N bits,

(7) calculating and storing in said memory a final quotient from the last current quotient guess plus the latest current reciprocal guess multiplied by the latest remainder guess.

2. A method as claimed in Claim 1, wherein step (1) includes the steps of

(1a) determining when the divisor mantissa is all binary ones and

(1b) if the divisor mantissa is all binary ones, selecting the initial guess from a set of numbers equal to or greater than an actual magnitude of the reciprocal.

3. A method as claimed in Claim 2, wherein step (1) further includes a step of selecting a round-to-nearest operation for rounding the initial reciprocal guess.

4. A method as claimed in any preceding Claim, wherein each of steps (2) through (6) includes a step of rounding by a round-to-nearest operation.

5. A method as claimed in any preceding Claim, wherein step (7) includes a step of rounding by other than a round-to-nearest operation.

6. A method as claimed in Claim 5, wherein step (7) includes a step of providing an indication that the final quotient is exact when and only when the remainder magnitude is zero.

7. Apparatus for performing floating point division of a dividend by a divisor to produce a quotient having a mantissa of N bits in a data processing system having memory, the system comprising

means for determining and storing in said memory an initial guess of a reciprocal of the divisor,

and being characterised by

means for calculating and storing in said memory an initial guess of the quotient, by multiplying the dividend by said reciprocal,

means for repeatedly

increasing the precision of the initial guess of the reciprocal by calculating and storing in said memory an error parameter, by one minus the divisor multiplied by the current reciprocal, and calculating and storing in said memory a new guess of the reciprocal by adding to the current guess of the reciprocal the error parameter multiplied by the current guess of the reciprocal, calculating and storing in said memory a remainder guess by subtracting from the dividend the divisor multiplied the current guess of the quotient, and

increasing the precision of the mantissa of the initial guess of the quotient by calculating and storing in said memory a new current quotient from the current quotient plus the remainder guess multiplied by the new guess of the reciprocal of the divisor,

until the precision of the reciprocal guess and the quotient guess exceeds N bits, and

means for calculating and storing in said memory a final quotient from the last current quotient guess plus the latest current reciprocal guess multiplied by the latest remainder guess.

8. Apparatus as claimed in Claim 7, wherein the means for determining the initial reciprocal guess includes a means for determining when the divisor mantissa is all binary ones and means for selecting the initial guess from a set of numbers equal to or greater than an actual magnitude of the reciprocal in response thereto.

9. Apparatus as claimed in Claim 8, wherein the means for determining the initial reciprocal further includes means for selecting a round-to-nearest operation for rounding the initial reciprocal guess.

10. Apparatus as claimed in Claim 9, wherein each means for calculating current guesses includes means for rounding by a round-to-nearest operation.

11. Apparatus as claimed in Claim 10, wherein means for calculating the final quotient includes means for rounding by other than a round-to-nearest operation.

12. Apparatus as claimed in Claim 11, wherein the means for calculating the final quotient includes means for providing an indication that the final quotient is exact when and only when the remainder magnitude is zero.

**Patentansprüche**

1. Ein Verfahren, um die Gleitkommadivision eines Dividenden durch einen Divisor durchzuführen und einen Quotienten zu erzeugen, der eine Mantisse aus N Bits in einem Datenverarbeitungssystem mit Speicher hat, wobei das Verfahren Schritte enthält, um

   (1) eine anfängliche Schätzung eines Reziprokwertes des Divisiors zu bestimmen und in diesem Speicher zu speichern,

   und durch Schritte gekennzeichnet wird, um

   (2) eine anfängliche Schätzung des Quotienten zu berechnen, indem der Dividend mit dem Reziprokwert multipliziert und in diesem Speicher gespeichert wird,

   (3) die Genauigkeit der anfänglichen Schätzung des Reziprokwertes zu steigern, indem ein Fehlerparameter berechnet und in dem Speicher gespeichert wird, wobei der mit dem aktuellen Reziprokwert multiplizierte Divisior. um eins reduziert wird, und Berechnung sowie Speicherung in diesem Speicher von einer neuen Schätzung des Reziprokwertes, indem der Fehlerparameter, der mit der aktuellen Schätzung des Reziprokwertes multipliziert wurde, zu der aktuellen Schätzung des Reziprokwertes addiert wird,

   (4) eine Teilungsrestschätzung zu berechnen und in diesem Speicher zu speichern, indem von dem Dividend der Divisor subtrahiert wird, der mit der aktuellen Schätzung des Quotienten multipliziert wurde,

   (5) die Genauigkeit der Mantisse von der anfänglichen Schätzung des Quotienten zu steigern, indem ein neuer aktueller Quotient aus dem aktuellen Quotienten plus Teilungsrestschätzung, die mit der neuen Schätzung des Reziprokwertes des Divisors multipliziert wurde, berechnet und in dem Speicher gespeichert wird,

   (6) die Schritte (3), (4) und (5) zu wiederholen, bis die Präzision der Reziprokwert- und der Quotientenschätzung N Bits überschreitet,

   (7) einen endgültigen Quotienten aus der letzten, aktuellen Quotientenschätzung plus der neuesten, aktuellen Reziprokwertschätzung, die mit der neuesten Teilungsrestschätzung multipliziert wurde, zu berechnen und in diesem Speicher zu speichern.

2. Ein Verfahren wie in Anspruch 1 angemeldet, wobei Schritt (1) Schritte enthält, um

   (1a) zu bestimmen, wenn die Divisormantisse insgesamt aus binären Einsen besteht und

   (1b) wenn die Divisormantisse insgesamt aus binären Einsen besteht, wobei die anfängliche Schätzung aus einem Satz von Zahlen ausgewählt wird, der gleich oder größer als eine aktuelle Größe des Reziprokwertes ist.

3. Ein Verfahren wie in Anspruch 2 angemeldet, wobei Schritt (1) außerdem einen Schritt enthält, um eine Operation zum Runden der anfänglichen Schätzung des Reziprokwertes auf den nächstliegenden Wert auszuwählen.

4. Ein Verfahren wie in irgendeinem vorhergehenden Anspruch angemeldet, wobei jeder der Schritte (2) bis (6) einen Schritt enthält, um einen Wert in einer Operation zum Runden auf den nächstliegenden Wert zu runden.

5. Ein Verfahren wie in irgendeinem vorhergehenden Anspruch angemeldet, wobei Schritt (7) einen Schritt enthält, um einen Wert ohne das Verfahren zum Runden des nächstliegenden Wertes zu runden.

6. Ein Verfahren wie in Anspruch 5 angemeldet, wobei Schritt (7) einen Schritt enthält, um eine Angabe zu liefern, daß der endgültige Quotient genau ist wenn, und nur wenn, die Größe des Teilungsrestes null ist.

**7.** Anordnung zur Durchführung der Gleitkommadivision eines Dividenden durch einen Divisor zur Erzeugung eines Quotienten, der eine Mantisse von N Bits in einem Datenverarbeitungssystem hat, wobei das System enthält,

Mittel, um eine anfängliche Schätzung eines Reziprokwertes des Divisiors zu bestimmen und in diesem Speicher zu speichern,

und gekennzeichnet wird durch

Mittel, um eine anfängliche Schätzung des Quotienten zu berechnen, indem der Dividend mit dem Reziprokwert multipliziert und in diesem Speicher gespeichert wird,

Mittel, um wiederholt

die Genauigkeit der anfänglichen Schätzung des Reziprokwertes zu steigern, indem ein Fehlerparameter berechnet und in dem Speicher gespeichert wird, wobei der mit dem aktuellen Reziprokwert multiplizierte Divisior um eins reduziert wird, und Berechnung sowie Speicherung in diesem Speicher von einer neuen Schätzung des Reziprokwertes, indem der Fehlerparameter, der mit der aktuellen Schätzung des Reziprokwertes multipliziert wurde, zu der aktuellen Schätzung des Reziprokwertes addiert wird,
eine Teilungsrestschätzung zu berechnen und in diesem Speicher zu speichern, indem von dem Dividend der Divisor subtrahiert wird, der mit der aktuellen Schätzung des Quotienten multipliziert wurde,
die Genauigkeit der Mantisse von der anfänglichen Schätzung des Quotienten zu steigern, indem ein neuer aktueller Quotient aus dem akutellen Quotienten plus Teilungsrestschätzung, die mit der neuen Schätzung des Reziprokwertes des Divisors multipliziert wurde, berechnet und in dem Speicher gespeichert wird;

bis die Präzision der Reziprokwert- und der Quotientenschätzung N Bits überschreitet, und

Mittel, um einen endgültigen Quotienten aus der letzten, aktuellen Quotientenschätzung plus der neuesten, aktuellen Reziprokwertschätzung, die mit der neuesten Teilungsrestschätzung multipliziert wurde, zu berechnen und in diesem Speicher zu speichern.

**8.** Anordnung wie in Anspruch 7 angemeldet, wobei die Mittel zur Bestimmung der anfänglichen Schätzung des Reziprokwertes ein Mittel enthalten, um festzulegen, wenn die Divisormantisse insgesamt aus Einsen besteht und Mittel, um die anfängliche Schätzung aus einem Satz mit Zahlen auszuwählen, die gleich oder größer als eine aktuelle Größe des Reziprokwertes als Antwort hierauf sind.

**9.** Anordnung wie in Anspruch 8 angemeldet, wobei die Mittel zur Bestimmung des anfänglichen Reziprokwertes außerdem Mittel enthalten, um eine Operation auszuwählen, um den anfänglichen Reziprokwert auf den nächstliegenden Wert zu runden.

**10.** Anordnung wie in Anspruch 9 angemeldet, wobei die Mittel zur Berechnung der aktuellen Schätzungen Mittel enthalten, um den Wert auf den nächstliegenden Wert zu runden.

**11.** Anordnung wie in Anspruch 10 angemeldet, wobei die Mittel zur Berechnung des endgültigen Quotienten Mittel enthalten, um diesen mit einer anderen Operation als die des Rundens auf den nächstliegenden Wert zu runden.

**12.** Anordnung wie in Anspruch 11 angemeldet, wobei die Mittel zur Berechnung des endgültigen Quotienten Mittel enthalten, um eine Angabe zu liefern, daß der endgültige Quotient exakt ist, wenn und nur wenn, die Größe des Teilungsrestes null ist.

**Revendications**

**1.** Procédé destiné à effectuer une division en virgule flottante d'un dividende par un diviseur afin de produire un quotient comportant une mantisse de N bits dans un système de traitement de données comportant une mémoire, le procédé comprenant les étapes consistant à

(1) déterminer et mémoriser dans ladite mémoire une estimation initiale d'un inverse du diviseur,

et étant caractérisé par les étapes consistant à

(2) calculer et mémoriser dans ladite mémoire une estimation initiale du quotient, en multipliant le dividende par ledit inverse,

(3) accroître la précision de l'estimation initiale de l'inverse en calculant et en mémorisant dans ladite mémoire un paramètre d'erreur, de un moins le diviseur multiplié par l'inverse en cours, et calculer et mémoriser dans ladite mémoire une nouvelle estimation de l'inverse en ajoutant à l'estimation en cours de l'inverse le paramètre d'erreur multiplié par l'estimation en cours de l'inverse,

(4) calculer et mémoriser dans ladite mémoire une estimation du reste en soustrayant du dividende le diviseur multiplié par l'estimation en cours du quotient,

(5) accroître la précision de la mantisse de l'estimation initiale du quotient en calculant et en mémorisant dans ladite mémoire un nouveau quotient en cours à partir du quotient en cours plus l'estimation du reste multipliée par la nouvelle estimation de l'inverse du diviseur,

(6) répéter les étapes (3), (4) et (5) jusqu'à ce que la précision de l'estimation de l'inverse et de l'estimation du quotient dépasse N bits,

(7) calculer et mémoriser dans ladite mémoire un quotient final à partir de la dernière estimation du quotient en cours plus la dernière estimation de l'inverse en cours multipliée par la dernière estimation du reste.

2. Procédé selon la revendication 1, dans lequel l'étape (1) comprend les étapes consistant à

(1a) déterminer lorsque la mantisse du diviseur est constituée entièrement de uns binaires et

(1b) si la mantisse du diviseur est constituée entièrement de uns binaires, sélectionner l'estimation initiale à partir d'un ensemble de nombres égaux ou supérieurs à une grandeur réelle de l'inverse.

3. Procédé selon la revendication 2, dans lequel l'étape (1) comprend en outre une étape consistant à sélectionner une opération d'arrondi au plus proche afin d'arrondir l'estimation de l'inverse initiale.

4. Procédé selon l'une quelconque des revendications précédentes, dans lequel chacune des étapes (2) à (6) comprend une étape consistant à effectuer un arrondi par une opération d'arrondi au plus proche.

5. Procédé selon l'une quelconque des revendications précédentes, dans lequel l'étape (7) comprend une étape consistant à effectuer l'arrondi par une autre opération qu'une opération d'arrondi au plus proche.

6. Procédé selon la revendication 5, dans lequel l'étape (7) comprend une étape consistant à procurer une indication de ce que le quotient final est exact lorsque et uniquement lorsque la grandeur du reste est zéro.

7. Dispositif destiné à effectuer une division en virgule flottante d'un dividende par un diviseur afin de produire un quotient comportant une mantisse de N bits dans un système de traitement de données comportant une mémoire, le système comprenant

un moyen destiné à déterminer et mémoriser dans ladite mémoire une estimation initiale d'un inverse du diviseur,

et étant caractérisé par

un moyen destiné à calculer et mémoriser dans ladite mémoire une estimation initiale du quotient, en multipliant le dividende par ledit inverse,

un moyen destiné à

accroître la précision de l'estimation initiale de l'inverse en calculant et en mémorisant dans ladite mémoire un paramètre d'erreur, de un moins le diviseur multiplié par l'inverse en cours, et calculer et mémoriser dans ladite mémoire une nouvelle estimation de l'inverse en ajoutant à l'estimation en cours de l'inverse le paramètre d'erreur multiplié par l'estimation en cours de l'inverse,

calculer et mémoriser dans ladite mémoire une estimation du reste en soustrayant du dividende le diviseur multiplié par l'estimation en cours du quotient, et

accroître la précision de la mantisse de l'estimation initiale du quotient en calculant et en mémorisant dans ladite mémoire un nouveau quotient en cours à partir du quotient en cours plus l'estimation du reste multipliée par la nouvelle estimation de l'inverse du diviseur,

de façon répétitive jusqu'à ce que la précision de l'estimation de l'inverse et de l'estimation du quotient dépasse N bits, et

un moyen destiné à calculer et à mémoriser dans ladite mémoire un quotient final à partir de la dernière estimation du quotient en cours plus la dernière estimation de l'inverse en cours multipliée par la dernière estimation du reste.

8. Dispositif selon la revendication 7, dans lequel le moyen destiné à déterminer l'estimation de l'inverse initial comprend un moyen destiné à déterminer lorsque la mantisse du diviseur est entièrement constituée de uns binaires et un moyen destiné à sélectionner l'estimation initiale à partir d'un ensemble de nombres égaux ou supérieurs à une grandeur réelle de l'inverse en réponse à celui-ci.

9. Dispositif selon la revendication 8, dans lequel le moyen destiné à déterminer l'inverse initiale comprend en outre un moyen destiné à sélectionner une opération d'arrondi au plus proche afin d'arrondir l'estimation de l'inverse initiale.

10. Dispositif selon la revendication 9, dans lequel chaque moyen destiné à calculer les estimations en cours comprend un moyen destiné à arrondir au moyen d'une opération d'arrondi au plus proche.

11. Dispositif selon la revendication 10, dans lequel le moyen destiné à calculer le quotient final comprend un moyen destiné à arrondir par une autre opération qu'une opération d'arrondi au plus proche.

12. Dispositif selon la revendication 11, dans lequel le moyen destiné à calculer le quotient final comprend un moyen destiné à procurer une indication de ce que le quotient final est exact lorsque et uniquement lorsque la grandeur du reste est zéro.

TO EVALUATE a/b:

FILTER OUT SPECIAL CASES INVOLVING NaNs, INFINITES, AND ZEROS, AND RETURN RESULTS REQUIRED BY IEEE STANDARD. —10

SAVE CURRENT ROUNDING MODE
SET ROUNDING MODE TO ROUND TO NEAREST. ENTER MODE IN WHICH RESULTS ARE KEPT IN INTERNAL FORMAT (i. e. EXTRA BIT OF EXPONENT, NO DENORMALIZED FORMAT. RESULTS OF OPERATIONS DO NOT CHANGE FLOATING POINT STATUS BITS.) —12

GENERATE a GUESS y TO THE RECIPROCAL OF b. THE MAGNI-TUDE OF y MUST BE GREATER THAN THE MAGNITUDE OF 1/b IF THE MANTISSA OF b CONSISTS OF ALL 1 BITS. —14

GENERATE AN APPROXIMATE QUOTIENT AS $q = ay$. —16

18— IMPROVE y BY
$e = 1 - b^{*}y$
$y = y + e^{*}y$

IMPROVE q BY
$r = a - b^{*}q$
$q = q + r^{*}y$ —20

WHEN $y = 1/b$ CORRECTLY ROUNDED (EXCEPT WHEN b's MANTISSA CONSISTS OF ALL ONE BITS, IN WHICH CASE THE MAGNITUDE OF y IS 1 ULP TOO SMALL), AND WHEN q IS KNOWN TO BE WITHIN 1 ULP OF THE CORRECT QUOTIENT COMPUTE $r = a - b^{*}q$ —22

RESTORE ORIGINAL ROUNDING MODE, AND CON-VENTIONAL MODE OF FLOATING POINT OPERATION —24

COMPUTE FINAL QUOTIENT AS $q = q + r^{*}y$
THIS RESULT WILL BE CORRECTLY ROUNDED AS REQUIRED BY THE ROUNDING MODE, AND THE LAST OPERATION WILL CORRECTLY REPORT THE STATUS OF THE QUOTIENT, INCLUDING INEXACT RESULT. —26

FIG. 1

TO EVALUATE a/b:

FILTER OUT SPECIAL CASES INVOLVING NaNs, INFINITES, AND ZEROS, AND RETURN RESULTS REQUIRED BY IEEE STANDARD. — 30

SAVE CURRENT ROUNDING MODE AND SET ROUNDING MODE TO ROUND TO NEAREST. ENTER MODE IN WHICH RESULTS ARE KEPT IN INTERNAL FORMAT (i. e. EXTRA BIT OF EXPONENT, NO DENORMALIZED FORMAT. RESULTS OF OPERATIONS DO NOT CHANGE FLOATING POINT STATUS BITS.) — 32

GENERATE a GUESS y TO THE RECIPROCAL OF b, USING THE RECIP INSTRUCTION AND TABLE AS GIVEN IN APPENDIX A, ACCORDING TO 1. — 34

GENERATE $e = 1 - b \cdot y$ — 36

GENERATE AN APPROXIMATE QUOTIENT AS $q = ay$, ACCORDING TO 2 — 38

IMPROVE y AND q BY:
$$y = y + e \cdot y$$
$$r = a - b \cdot q$$
$$e = 1 - b \cdot y$$
$$q = q + r \cdot y$$
$$y = y + e \cdot y$$
$$r = a - b \cdot q$$
$$e = 1 - b \cdot y$$
$$q = q + r \cdot y$$
$$y = y + e \cdot y$$
$$r = a - b \cdot q$$
$$e = q - b \cdot y$$
$$y = y + e \cdot y$$
— 40

AT THIS POINT, ALL THE CONDITIONS NEEDED TO APPLY 5 ARE SATISFIED. RESTORE ORIGINAL ROUNDING MODE, AND CONVENTIONAL MODE OF FLOATING POINT OPERATION — 42

COMPUTE FINAL QUOTIENT AS $q = q + r \cdot y$
THIS RESULT WILL BE CORRECTLY ROUNDED AS REQUIRED BY THE ROUNDING MODE, AND THE LAST OPERATION WILL CORRECTLY REPORT THE STATUS OF THE QUOTIENT, INCLUDING INEXACT RESULT. — 44

FIG. 2

TO EVALUATE a/b:

FILTER OUT SPECIAL CASES INVOLVING NaNs, INFINITES, AND ZEROS, AND RETURN RESULTS REQUIRED BY IEEE STANDARD. —50

SAVE CURRENT ROUNDING MODE     SET ROUNDING MODE TO ROUND TO NEAREST. ENTER MODE IN WHICH RESULTS ARE KEPT IN INTERNAL FORMAT (i. e. EXTRA BIT OF EXPONENT, NO DENORMALIZED FORMAT. RESULTS OF OPERATIONS DO NOT CHANGE FLOATING POINT STATUS BITS.) 52

GENERATE a GUESS y TO THE RECIPROCAL OF b, USING THE RECIP INSTRUCTION AND TABLE AS GIVEN IN APPENDIX A. REFINE THE RECIPROCAL BY GENERATING     $e = 1 - b^*y$
$y' = y + e^*y$
$y = y + e^*y'$
WHICH GENERATES A RECIPROCAL GOOD TO 27- BITS, AND WHICH SATISFIES THE REQUIREMENTS OF STEP 1.

GENERATE $e = 1 - b^* y$ 56

GENERATE AN APPROXIMATE QUOTIENT AS $q = ay$, ACCORDING TO STEP 2. 54

58

IMPROVE y AND q BY:
$y = y + e^*y$
$r = a - b^*q$
$e = 1 - b^*y$
$q = q + r^*y$
$y = y + e^*y$
$r = a - b^*q$
60

62

AT THIS POINT, ALL THE CONDITIONS NEEDED TO APPLY STEP 5 ARE SATISFIED. RESTORE ORIGINAL ROUNDING MODE, AND CONVENTIONAL MODE OF FLOATING POINT OPERATION

COMPUTE FINAL QUOTIENT AS  $q = q + r^*y$
THIS RESULT WILL BE CORRECTLY ROUNDED AS REQUIRED BY THE ROUNDING MODE, AND THE LAST OPERATION WILL CORRECTLY REPORT THE STATUS OF THE QUOTIENT, INCLUDING INEXACT RESULT.

**FIG. 3**

64

FIG. 4

START

200 — DECODE

202 — READ OPERANDS

FIG. 5

NO ← 204 NORMAL #?

206 — FIX - UP

YES

208 — DIVIDE INST? — YES

210

212 — START DIVIDE MICROCODE

214 — EXECUTE MICROCODE

NO

MULTIPLY — 216

ADD — 218

WRITE — 220

```
                                                            210
┌──────────────────────────────────────────────┐
│   RESET TO ROUND TO NEAREST ROUNDING MODE      │─── 230
└──────────────────────────────────────────────┘
                      │
                      ▼
┌──────────────────────────────────────────────┐
│             RECIPRICAL LOOKUP  y               │─── 232
└──────────────────────────────────────────────┘
                      │
                      ▼
┌──────────────────────────────────────────────┐
│            GENERATE ERROR TERM,  e             │─── 234
└──────────────────────────────────────────────┘
                      │
                      ▼
┌──────────────────────────────────────────────┐
│       GENERATE FIRST QUOTIENT q APPROXIMATION  │─── 236
└──────────────────────────────────────────────┘
                      │
                      ▼
┌──────────────────────────────────────────────┐
│  INCREASE PRECISION OF y AND q BY PERFORMING   │─── 238
│     FOLLOWING MULTIPLY & ADD OPERATIONS        │
└──────────────────────────────────────────────┘
                      │
                      ▼
┌──────────────────────────────┐
│        IMPROVE y AND q BY:    │
│          y = y + e*y          │
│          r = a - b*q          │─── 240
│          e = 1 - b*y          │
│          q = q + r*y          │
│          y = y + e*y          │
│          r = a - b*q          │
│          e = 1 - b*y          │
│          q = q + r*y          │
│          y = y + e*y          │
│          r = a - b*q          │
│          e = q - b*y          │
│          y = y + e*y          │
└──────────────────────────────┘
                      │
                      ▼
┌──────────────────────────────────────────────┐
│        RESTORE ORIGINAL ROUNDING MODE          │─── 242
└──────────────────────────────────────────────┘
                      │
                      ▼
```

FIG. 6